(19) **Europäisches Patentamt / European Patent Office / Office européen des brevets**

(11) **EP 2 295 794 A2**

(12) **EUROPEAN PATENT APPLICATION**

(43) Date of publication:
**16.03.2011 Bulletin 2011/11**

(51) Int Cl.:
**F03D 7/02** *(2006.01)*

(21) Application number: **10251475.9**

(22) Date of filing: **20.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **20.08.2009 US 544447**

(71) Applicant: **Hamilton Sundstrand Corporation Windsor Locks, CT 06096-1010 (US)**

(72) Inventor: **Bertolotti, Fabio P.**
**South Windsor, CT 06074 (US)**

(74) Representative: **Tomlinson, Kerry John**
**Dehns**
**St Bride's House**
**10 Salisbury Square**
**London**
**EC4Y 8JD (GB)**

(54) **Wind turbine as wind-direction sensor**

(57) A method of wind turbine control includes determining wind tangential velocity, averaged over a rotor swept plane, from an instantaneous measurement of a rotor azimuth angle and a rotor teeter angle.

MEASURING THE INSTANTANEOUS YAW RATE, $q$,

MEASURING THE INSTANTANEOUS ROTOR AZIMUTH ANGLE, $\psi$,

MEASURING THE INSTANTANEOUS BLADE "OUT−OF−MEAN−PLANE" ANGLE $\beta$ OF EACH BLADE,

STORING THE VALUE OF $\beta$ OVER AT LEAST ONE COMPLETE ROTATION OF THE ROTOR,

FOURIER DECOMPOSING THE ANGLE $\beta(\psi)$ INTO ITS MEAN VALUE AND HARMONICS IN $\psi$

MEASURING THE WIND SHEAR RATE, $K_{vs}$, AT A LOCATION NEAR THE WIND TURBINE,

MEASURING THE ROTOR−AVERAGED AXIAL WIND COMPONENT, $\bar{U}_o$,

USING A GOVERNING EQUATION OF MOTION FOR THE ROTOR TO RECOVER THE TANGENTIAL WIND COMPONENT.

**FIG.6**

## Description

## BACKGROUND

The present disclosure relates to a wind turbine, and more particularly to wind turbines designed for optimum performance when maintained in a particular orientation relative to wind direction.

Active systems have been employed to trim a wind turbine in yaw to maintain a desired orientation. A controller of the active system maintains the angle between the wind direction and the rotational axis of the rotor, i.e. the axis of the rotor shaft, at a predetermined value. As the wind direction changes, the controller directs yaw actuation motors to rotate the nacelle into a desired angle with respect to the wind. For effective controller operation, the instantaneous direction of the wind must be known accurately. Therefore, it is common to mount a wind-direction indicator to the top of the nacelle to measure wind direction. This approach may have several complicating issues.

The wind direction felt by the wind-direction indicator may be distorted by the passage of the blades, especially for the common layout that places the rotor upwind of the nacelle. Also, the wind-direction is measured at a single point in space, which, in the presence of atmospheric turbulence, may cause the indicated wind direction to depart from the desired rotor-averaged value. Furthermore, the wind-direction indicator, being mounted externally and above, the nacelle, is subjected to force majeure events from the weather, such as gale-force winds and lighting strikes. Lastly, the passage of the blades may cause a periodic, "fish-tail," motion of the wind-direction indicator which may, over time, result in mechanical fatigue and lubrication issues that may result in measurement errors due to friction and other undesired mechanical effects.

## SUMMARY

A method of wind turbine control includes determining wind tangential velocity, averaged over a rotor swept plane, from an instantaneous measurement of a rotor azimuth angle and a rotor teeter angle to control a wind turbine yaw angle.

A method for measuring the tangential wind velocity, averaged over a rotor swept area of a wind turbine includes measuring the instantaneous yaw rate, the instantaneous rotor azimuth angle $\psi$, and the instantaneous blade "out-of-mean-plane" angle $\beta$, storing the teeter angle over at least one complete rotation of the rotor, Fourier decomposing the angle $\beta(\psi)$ into the mean value and harmonics in $\psi$, measuring the wind shear rate at a location adjacent to the wind turbine, measuring the rotor-averaged axial wind component, and using a governing equation of motion for the rotor to recover the tangential wind component.

A wind turbine comprises a tower; a nacelle rotationally attached to said tower for rotation about a yaw axis; a rotor rotationally attached to said nacelle for rotation about an axis of rotation, said rotor operable to teeter out of a mean plane; a yaw drive system operable to adjust a yaw-angle of said nacelle about said yaw axis; a sensor system operable to measure at least one quantity of said rotor; and a module in communication with said sensory system, said module operable to measure wind direction to control said yaw drive system.

## BRIEF DESCRIPTION OF THE DRAWINGS

Various features will become apparent to those skilled in the art from the following detailed description of the disclosed non-limiting embodiment. The drawings that accompany the detailed description can be briefly described as follows:

Figure 1 is a general side view of a complete wind turbine;
Figure 2 is a general front view of a complete wind turbine;
Figure 3 is a schematic view of a module for use with the wind turbine which determines a wind direction;
Figure 4 is a functional block diagram view of wind direction determination;
Figure 5 is a general top view of a complete wind turbine;
Figure 6 is a flow chart illustrating a method of wind direction determination.

## DETAILED DESCRIPTION

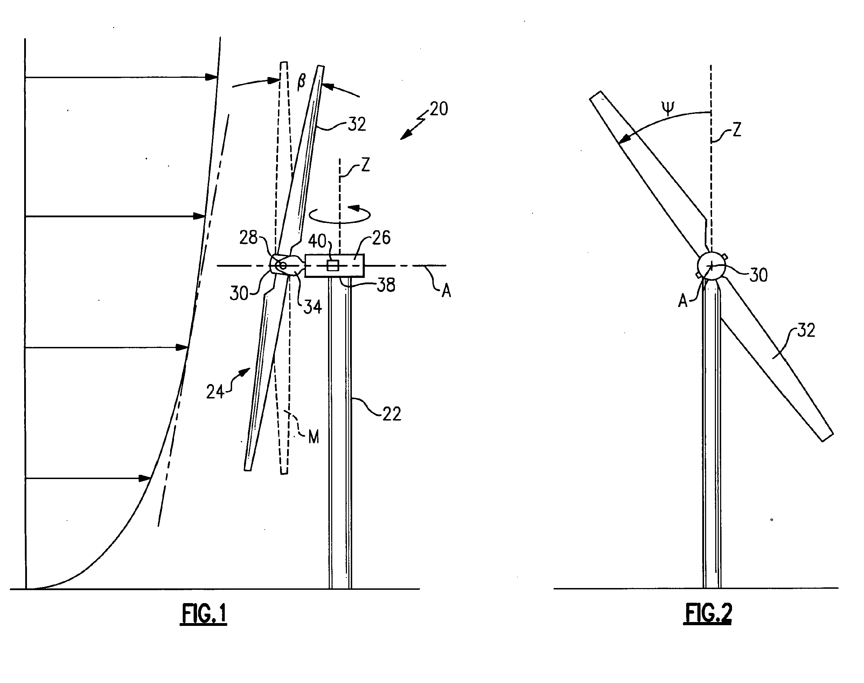

Figure 1 schematically illustrates a wind turbine 20 which generally includes three main structural systems including a tower 22, a rotor 24, and a nacelle 26 that is rotationally attached to the tower 22 for rotation about a yaw axis Z. Aerodynamic power generated by the rotor 24 is controlled by changing a yaw angle of the nacelle 26. The rotor 24 is connected with the nacelle 26 through a teeter hinge system 28 to define a teeter angle $\beta$ which is defined relative to a mean vertical plane M ($\beta$ =0). The teeter hinge system 28 facilitates balance of the gyroscopic forces through blade acceleration and aerodynamic damping forces. Although a teeter hinge system is disclosed in the illustrated non-limiting embodiment, it should be understood that the disclosure also applies to a rotor which has individually hinged blades.

The rotor 24 includes a hub 30 having a multiple of blades 32 which rotate through an azimuth angle ψ (Figure 2). A portion of each blade 32 which mounts to the hub 30 is defined herein as a blade root. For nomenclature and identification purposes only, the blade 32 may be defined along the span, i.e., distance from root to tip, into three sections: (1) an area of the blade extending from the blade root to essentially about 15% of the span is called a blade-root region; (2) an area from 15% of the span to about 25% of the span is called an inner blade region; and a remainder area of the span is called an outer blade region.

The hub 30 is supported upon a slow speed shaft 34 which rotates about an axis of rotation A to drive at least one generator 36 contained in the nacelle 26. The nacelle 26 is rotationally attached to the tower 22 through a yaw bearing 38 to define a yaw angle α. The entire tower-top assembly, i.e. the components above the yaw bearing 38 may be rotated about the yaw axis Z through at least one yaw drive system 40 (illustrated schematically).

For a two-bladed, teetered rotor 24, the dynamic motion of the rotor blades 32, in particular the teeter angle β, is utilized to deduce the wind-direction, averaged over the rotor plane. The deduction includes measurements of other factors which affect the teeter angle β with a dynamic equation of motion to deduce the wind direction. The measurement of wind direction, averaged over the entire swept area of the rotor 24 is utilized for wind turbine control rather than the conventional extrapolated wind direction averages from a single point measurement. Such a measurement in which the rotor itself is the sensor provides a more robust system against environmental factors.

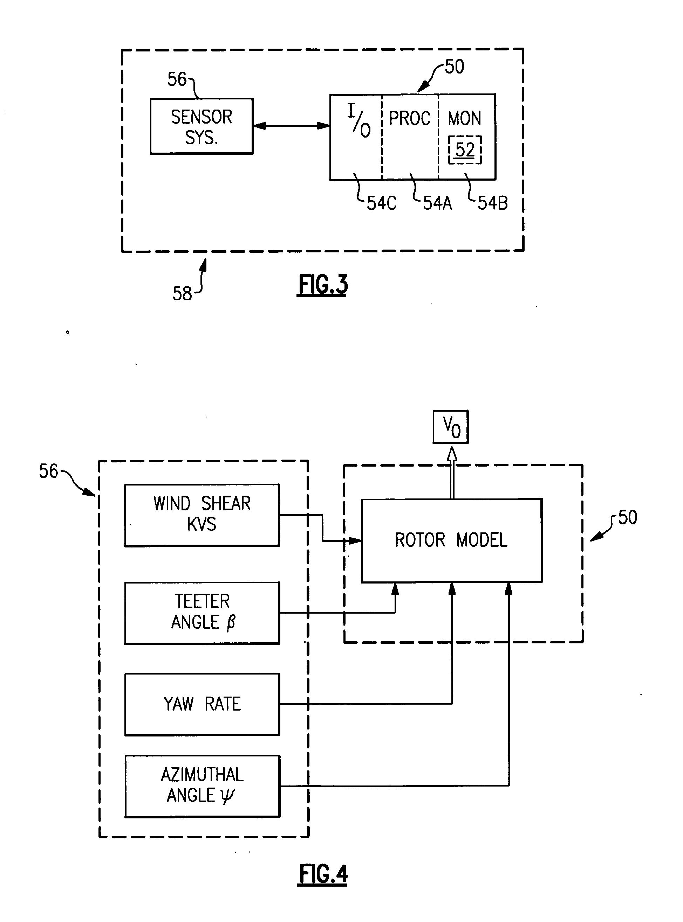

Referring to Figure 3, a module 50 executes a wind direction determination process 52. The functions of the determination process 52 are disclosed in terms of functional block diagrams, and it should be understood by those skilled in the art with the benefit of this disclosure that these functions may be enacted in either dedicated hardware circuitry or programmed software routines capable of execution in a microprocessor based electronics control embodiment. In one non-limiting embodiment, the module 50 may be a portion of a flight control computer, a portion of a central vehicle control, an interactive vehicle dynamics module, a stand-alone line replaceable unit or other system.

The module 50 typically includes a processor 54A, a memory 54B, and an interface 54C. The processor 54A may be any type of known microprocessor having desired performance characteristics. The memory 54B may, for example only, include UVPROM, EEPROM, FLASH, RAM, ROM, DVD, CD, a hard drive, or other computer readable medium which stores the data and control algorithms described herein. The interface 54C facilitates communication with a sensor system 56 as well as other systems. The module 50 and the sensor system 56 provide a wind-direction determination system 58 for the wind turbine 20.

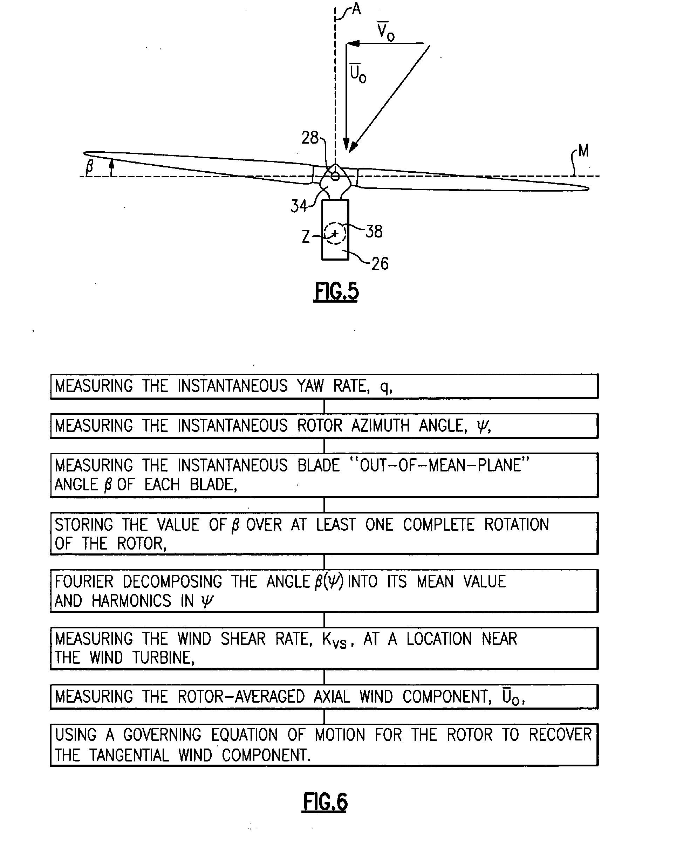

Referring to Figure 4, signals from the sensor system 56 provide measurement of the instantaneous rotor azimuthal position, ψ, the rotor teeter angle, β, and the instantaneous wind-shear exponent Kvs at, or near, the wind turbine 20 location, which are communicated to the module 50. The module 50 computes, using a mathematical rotor model of the rotor dynamics, the amount of tangential velocity at the rotor, $\overline{V}_0$ necessary to yield the measured values of teeter angle deflection β (Figure 5). The inferred tangential velocity and the measured axial velocity are combined to yield the desired end product, namely the angle misalignment between the rotor rotational axis and the wind direction.

Referring to Figure 5, the rotor teeter angle β, being a measure of the effect of tangential velocity over the entire span of the rotor blade, provides the desired, average measurement of wind direction. The use of the rotor 24 as the sensor provides force-majeure (extreme weather) protection to the wind-direction system 58 since the rotor 24 is designed to survive force majeure events, and the sensor system 56 are generally protected within the nacelle 26.

The wind velocity varies with spatial location and time. As such, the desired value is wind averaged velocity, which is wind velocity averaged over the swept-area of the rotor 24. Wind averaged velocity $\overline{V}$, is divided into three components $\{\overline{U}_0, \overline{V}_0, \overline{W}_0\}$ which represent, respectively, the component along the axis of rotation of the rotor 24, the component tangential to this axis along a direction parallel to the ground, and the component tangential to this axis along a direction essentially vertical, or perpendicular to the ground. Knowledge of $\overline{V}$ is required for control of yaw position. Of the three wind components, $\overline{V}_0$ may be the most difficult to measure. The component $\overline{U}_0$ directly affects the power output of the wind turbine 20, hence is relatively easy to measure. The vertical component $\overline{W}_0$ is mainly determined by the local ground topology at, and near, the site of the wind turbine 20 and can be readily determined from in-situ measurements prior to installation of the wind turbine 20. The tangential $\overline{V}_0$ is determined by weather patterns, which, in turn, may be rather difficult to predict on a local and instantaneous level.

The disclosure provides for the measurement of the tangential wind velocity $\overline{V}_0$, averaged over the rotor swept plane, from the instantaneous measurement of the rotor azimuth angle ψ and the rotor teeter angle β when the rotor 24 has a teeter hinge system or individually hinged blades. The teeter angle β depends on other quantities simultaneously present with tangential wind velocity $\overline{V}_0$, including: yaw rate, wind-shear, and axial wind velocity, as shown in a governing equation of motion for the rotor 24.

The governing equation is utilized to extract the tangential wind velocity from the measured quantities. A convenient equation to use, for example, is the linearized form of the equation governing the instantaneous teeter angle β. For the case that the Fourier expansion of the teeter angle β (ψ) is limited to the first harmonic:

$$\beta = \beta_0 + \beta_{1c}\cos(\psi) + \beta_{1s}\sin(\psi) \qquad (1)$$

The linearized form of the equation is:

$$\begin{bmatrix} K & B & -\gamma\bar{q}\bar{d}/12 \\ 2B & K-1 & \gamma/8 \\ \gamma\bar{U}_0/6 & -\gamma/8 & K-1 \end{bmatrix} \begin{Bmatrix} \beta_0 \\ \beta_{1c} \\ \beta_{1s} \end{Bmatrix} = \begin{Bmatrix} \gamma A/2 \\ -2\bar{q} - \frac{\gamma}{2}\left[(\bar{V}_0 + \bar{q}\bar{d})A_3 + K_{vs}\bar{U}/4\right] \\ -\gamma\bar{q}/8 \end{Bmatrix} \qquad (2)$$

Where:

K =            Flapping inertial natural frequency = $1+\varepsilon+K_\beta/(I\beta\Omega^2)$
$K\beta$ =         hinge stiffness
$\varepsilon$ =           hinge offset
Kvs =       Linear wind-shear constant
A =            First axisymmetric flow term
A3 =         Second axisymmetric flow term
B =            Gravity term
$\bar{d}$ =           Normalized yaw moment arm
$\bar{q}$ =           Normalized yaw rate
$\gamma$ =            Lock number
$\bar{U}$ =           Nondimensional free-stream wind velocity
$\bar{U}_0$ =         Nondimensional wind velocity, rotor axial component
$\bar{V}_0$ =         Nondimensional wind velocity, rotor tangential component

A detailed description of each term can be found in chapter 4 of "Wind Energy Explained" by J.F. Manwell, J.G. McGowan and A.L. Rogers, Wiley Publishers, 2002. Equations for the higher harmonics of β are well known in the art and can be included to increase the accuracy of this disclosure. In the case of individually hinged blades, the equations of motion refer to the flapping degrees of freedom β0; β1s; β1c of each blade as is well known in the art.

Equation 3 relates the wind tangential direction, $\bar{V}_0$, to the instantaneous teeter angle β and azimuthal angle ψ, as well as the instantaneous yaw rate q, vertical wind-shear factor Kvs, and axial wind velocity $\bar{U}_0$. Thus, knowledge of the teeter angle β as a function of the azimuthal angle ψ provides a measure of many simultaneous quantities.

The disclosure herein describes use of the governing equations of motion, together with a measurement of other quantities, namely yaw rate, wind shear and axial wind velocity that affect teeter angle β to deduce the tangential wind velocity $\bar{V}_0$. One key enabler is the fact that these "other" quantities are relatively easier to measure than the tangential wind velocity. In particular:

The yaw rate q is a mechanical motion of the wind turbine 20 about axis Z, and can be readily measured; the wind shear rate Kvs is measurable by a multitude of methods known in the art, including Light Detection and Ranging (LIDAR) and Sonic Detection and Ranging (SODAR) devices based on light and sound modification due to air motion, respectively, as well as a series of anemometers placed at different heights above the ground. The wind shear exponent Kvs changes slowly with location around the wind turbine 20, as well as time of day, and a single measurement along a single vertical line provides a good representation of the value over the entire rotor swept area; and the value of the axial wind component, averaged over the rotor plane, manifests itself in the instantaneous generator power, when the generator is below rated speed, or in the yaw angle (2-bladed rotors, aerodynamic power control through active yaw) or collective blade pitch (rotors with pitch-controlled blades), when above rated speed. It is, therefore, also readily measurable.

In formula 3, the wind-shear, the rotor azimuth, the teeter angle and the yaw rate are combined to deduce the instantaneous value of $\bar{V}_0$:

$$\bar{V}_0 = -\left(\frac{4}{A_3\gamma} + \bar{d}\right)\bar{q} - \frac{4B}{A_3\gamma}\beta_0 - \frac{2(K-1)}{A_3\gamma}\beta_{1c} - \frac{1}{4A_3}\beta_{1s} - \frac{K_{vs}\bar{U}}{4} \quad (3)$$

In the case of individually hinged blades, the equation for V0 has an expanded form relative to formula (3), wherein the instantaneous hinge angles β0, β1s, ... of each blade appear. To recover the mean β0 and harmonics β1s and β1c from the measured teeter angle β, the signal history β(ψ) (i.e. as function of rotor azimuth position), is stored in a finite-length array in bucket-brigade format, i.e., newest sample in, oldest sample out. The array as a length of a multiple of 2π radians permits evaluation of β0; β1s; β1c via a Fourier transform. This transform may be performed after each new sample is added to the array, which thereby provides the instantaneous values of the desired quantities.

In operation and with reference to Figure 6, the method for measuring the tangential wind velocity, averaged over the rotor swept area, $\bar{V}_0$, generally includes: measuring the instantaneous yaw rate, q; measuring the instantaneous rotor azimuth angle ψ; measuring the instantaneous blade "out-of-mean-plane" angle β of each blade, storing the value of β over at least one complete rotation of the rotor; Fourier decomposing the angle β(ψ) into its mean value and harmonics in ψ; measuring the wind shear rate, Kvs, at a location near the wind turbine 20; measuring the rotor-averaged axial wind component, $\bar{U}_0$, e.g. via the wind turbine generated power, or average blade collective pitch; then using a governing equation of motion for the rotor to recover the tangential wind component.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings may fall within the scope of the appended claims. It is therefore to be understood that within the scope of the appended claims, the disclosure may be practised other than as specifically described. For that reason the appended claims should be studied to determine true scope and content.

**Claims**

1. A method of determining tangential wind velocity, averaged over a rotor swept plane of a wind turbine (20), comprising using instantaneous measurements of a rotor azimuth angle (ψ) and a rotor teeter angle (β).

2. A method as recited in claim 1, further comprising using a mathematical model of the rotor dynamics to infer the tangential velocity to yield the measured values of teeter angle deflection.

3. A method as recited in claim 1 or 2, further comprising:

   combining the tangential velocity and a measured axial velocity to yield an angle misalignment between the rotor rotational axis and the wind direction.

4. A method as claimed in any preceding claim for measuring the tangential wind velocity, averaged over a rotor swept area of a wind turbine, comprising:

   measuring an instantaneous yaw rate, q;
   measuring an instantaneous rotor azimuth angle, ψ;
   measuring an instantaneous out-of-mean-plane angle β of each blade of the rotor;
   storing the out-of-mean-plane angle β over at least one complete rotation of the rotor;
   Fourier decomposing the angle β(ψ) into mean values and harmonics in ψ;

measuring the wind shear rate, $K_{vs}$, at a location adjacent to said wind turbine;
measuring a rotor-averaged axial wind component, $\overline{U}_0$; and
using a governing equation of motion for the rotor to recover the tangential wind component.

5. A method as recited in claim 4, wherein the governing equation of motion is the linearized form of the equation governing the instantaneous teeter angle β.

6. A method as recited in claim 5, wherein the linearized form of the equation governing the instantaneous teeter angle β is:

$$
\begin{bmatrix}
K & B & -\gamma\bar{q}\bar{d}/12 \\
2B & K-1 & \gamma/8 \\
\gamma\bar{U}_0/6 & -\gamma/8 & K-1
\end{bmatrix}
\begin{Bmatrix}
\beta_0 \\
\beta_{1c} \\
\beta_{1s}
\end{Bmatrix}
=
\begin{Bmatrix}
\gamma A/2 \\
-2\bar{q} - \frac{\gamma}{2}\left[(\bar{V}_0 + \bar{q}\bar{d})A_3 + K_{vs}\bar{U}/4\right] \\
-\gamma\bar{q}/8
\end{Bmatrix}
\tag{2}
$$

Where:

$K$ = Flapping inertial natural frequency = $1 + \varepsilon + K_\beta/(I\beta\Omega^2)$
$K\beta$ = hinge stiffness
$\varepsilon$ = hinge offset
$K_{vs}$ = Linear wind-shear constant
$A$ = First axisymmetric flow term
$A_3$ = Second axisymmetric flow term
$B$ = Gravity term
$\bar{d}$ = Normalized yaw moment arm
$q$ = Normalized yaw rate
$\gamma$ = Lock number
$\overline{U}$ = Nondimensional free-stream wind velocity
$\overline{U}_0$ = Nondimensional wind velocity, rotor axial component
$\overline{V}_0$ = Nondimensional wind velocity, rotor tangential component

7. A method as recited in claim 4, 5 or 6, wherein measuring the wind shear rate includes measuring with LIDAR.

8. A method as recited in claim 4, 5 or 6, wherein measuring the wind shear rate includes measuring with SODAR.

9. A method of controlling a wind turbine, comprising:

determining tangential wind velocity by a method as claimed in any preceding claim, and using the determined velocity to control a wind turbine yaw angle.

10. A wind turbine (20) comprising:

a tower (22);
a nacelle (26) rotationally attached to said tower for rotation about a yaw axis (Z);
a rotor (24) rotationally attached to said nacelle for rotation about an axis (A) of rotation, said rotor being operable to teeter out of a mean plane;
a yaw drive system (40) operable to adjust a yaw-angle of said nacelle about said yaw axis;
a sensor system (56) operable to measure at least one quantity of said rotor;
and
a module (50) in communication with said sensor system, said module being operable to determine wind direction to control said yaw drive system.

11. A wind turbine as recited in claim 10, wherein said sensor system (56) includes a LIDAR to measure the wind shear rate.

**12.** A wind turbine as recited in claim 10, wherein said sensor system (56) includes a SODAR to measure the wind shear rate.

**13.** A wind turbine as recited in claim 10, 11 or 12, comprising means for performing the step(s) of any of claims 1 to 9.

FIG.2

FIG.1

56 ⌐

SENSOR
SYS.

⌐50

| I/O | PROC | MON |
| | | [52] |

54C  54A  54B

58 ⌐

**FIG.3**

V₀

56 ⌐

| WIND SHEAR KVS |

| TEETER ANGLE β |

| YAW RATE |

| AZIMUTHAL ANGLE ψ |

| ROTOR MODEL |

⌐50

**FIG.4**

**FIG.5**

| |
|---|
| MEASURING THE INSTANTANEOUS YAW RATE, q, |
| MEASURING THE INSTANTANEOUS ROTOR AZIMUTH ANGLE, $\psi$, |
| MEASURING THE INSTANTANEOUS BLADE "OUT-OF-MEAN-PLANE" ANGLE $\beta$ OF EACH BLADE, |
| STORING THE VALUE OF $\beta$ OVER AT LEAST ONE COMPLETE ROTATION OF THE ROTOR, |
| FOURIER DECOMPOSING THE ANGLE $\beta(\psi)$ INTO ITS MEAN VALUE AND HARMONICS IN $\psi$ |
| MEASURING THE WIND SHEAR RATE, $K_{VS}$, AT A LOCATION NEAR THE WIND TURBINE, |
| MEASURING THE ROTOR-AVERAGED AXIAL WIND COMPONENT, $\bar{U}_0$, |
| USING A GOVERNING EQUATION OF MOTION FOR THE ROTOR TO RECOVER THE TANGENTIAL WIND COMPONENT. |

**FIG.6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.F. Manwell ; J.G. McGowan ; A.L. Rogers.** Wind Energy Explained. Wiley Publishers, 2002